(19) 

**Europäisches Patentamt**
**European Patent Office**
**Office européen des brevets**

(11)  **EP 1 456 648 B1**

(12)  **EUROPEAN PATENT SPECIFICATION**

(45) Date of publication and mention
of the grant of the patent:
**15.04.2009 Bulletin 2009/16**

(51) Int Cl.:
*G01N 33/48* (2006.01)

(21) Application number: **02789816.2**

(22) Date of filing: **20.11.2002**

(86) International application number:
**PCT/US2002/037452**

(87) International publication number:
**WO 2003/044217 (30.05.2003 Gazette 2003/22)**

(54) **AUTOMATED SAMPLE PREPARATION METHODS AND DEVICES**

AUTOMATISCHE PROBENVORBEREITUNGSVERFAHREN UND -VORRICHTUNGEN

PROCEDES ET DISPOSITIFS DE PREPARATION AUTOMATISEE D'ECHANTILLON

(84) Designated Contracting States:
**AT BE BG CH CY CZ DE DK EE ES FI FR GB GR
IE IT LI LU MC NL PT SE SK TR**

(30) Priority: **20.11.2001 US 331654 P**

(43) Date of publication of application:
**15.09.2004 Bulletin 2004/38**

(73) Proprietor: **Exact Sciences Corporation
Maynard, MA 01754 (US)**

(72) Inventor: **WHITNEY, Duncan
Sudbury, MA 01776 (US)**

(74) Representative: **Crump, Julian Richard John et al
Mintz, Levin, Cohn, Ferris, Glovsky and
Popeo IP, LLP
Alder Castle
10 Noble Street
London EC2V 7JX (GB)**

(56) References cited:
EP-A- 1 138 784          WO-A-01/09386
WO-A-99/54510          US-B1- 6 391 622
US-B1- 6 406 893        US-B1- 6 444 461
US-B1- 6 555 360        US-B1- 6 579 719
US-B2- 6 586 193

• HEID C A ET AL: "REAL TIME QUANTITATIVE
PCR" GENOME RESEARCH, COLD SPRING
HARBOR LABORATORY PRESS, US, vol. 6, no.
10, October 1996 (1996-10), pages 986-994,
XP000642795 ISSN: 1088-9051
• GIBSON U E M ET AL: "A NOVEL METHOD FOR
REAL TIME QUANTITATIVE RT-PCR" GENOME
RESEARCH, COLD SPRING HARBOR
LABORATORY PRESS, US, vol. 6, no. 10, October
1996 (1996-10), pages 995-1001, XP000642796
ISSN: 1088-9051
• SCHUCHHARDT J ET AL: "NORMALIZATION
STRATEGIES FOR CDNA MICROARRAYS"
NUCLEIC ACIDS RESEARCH, OXFORD
UNIVERSITY PRESS, SURREY, GB, vol. 28, no.
10, 15 May 2000 (2000-05-15), pages E47I-E47V,
XP000982625 ISSN: 0305-1048

**Description**

Related Applications

This application claims the benefit of and priority to U.S.S.N. 60/331,654, filed November 20, 2001.

Technical Field Of The Invention

This invention relates generally to methods and apparatus for preparing biological samples for analysis. More particularly, the invention relates to methods and apparatus for automating nucleic acid sample preparation. The invention is particularly useful to normalize the concentration of samples for subsequent analysis.

Background Of The Invention

Nucleic acid samples are used with increasing frequency for the screening and diagnosis of disease. Evidence of parasitic, infectious, inherited or sporadic disease may be found in nucleic acid samples from different biological sources, including stool. For example, nucleic acid samples prepared from stool may be analyzed for indications suggestive colorectal cancer.

However, the variable and unpredictable amount of nucleic acid that is typically obtained from a biological sample is a significant problem when using biological samples (e.g. clinical samples) as sources of nucleic acid for automated diagnostic assays. Depending on the patient and/or the type of biological sample, the concentration of human nucleic acid target obtained from a standardized nucleic acid preparation procedure may vary by as much as 10,000-fold from sample to sample. This variability complicates automated nucleic acid preparation and analysis.

Attempts have been made to solve these problems. For example, automated assays using multiwell plates are typically performed on multiple dilutions of a nucleic acid sample in order to ensure that the nucleic acid concentration in at least one of the wells is appropriate for the type of assay being performed. However, such approaches produce unpredictable results and are wasteful of assay material. Moreover, these approaches require the analysis of large numbers of deposits for a single assay. Methods and apparatus available in the art do not provide a predictable and reproducible solution that minimizes the amount of sample handling and reduces the amount of sample analysis required for automated nucleic acid analysis. Accordingly, there remains a need in the art for methods and apparatus for automated sample preparation, and in particular for automated nucleic acid sample preparation.

Summary Of The Invention

The present invention generally provides methods and apparatus for automated sample processing. The invention is particularly useful to process multiple samples, either from one source or from many sources, in parallel to produce equally diluted samples for subsequent analysis.

Methods of the invention are useful for normalizing a plurality of samples. According to the invention, methods involve determining an initial concentration of an analyte in each of a plurality of samples. Methods of the invention further include introducing a portion of each sample on an apparatus such that the portion of each sample occupies a unique position in the apparatus relating to the analyte's initial concentration. Methods of the invention further include diluting the portion of each sample on the apparatus such that they are normalized with respect to analyte concentration.

The invention generally involves introducing or depositing a sample into an automated liquid handling procedure having multiple steps. The automated liquid handling procedure, for example, is a series of dilution steps or stages in a pre-determined pathway. According to the invention, a sample is introduced into the procedure at an sample-specific dilution stage or point in the pathway. The sample-specific dilution stage or point in the pathway is determined by the properties of the sample. For example, an initial property of the sample (for example, nucleic acid concentration) is preferably determined so that the sample can be introduced or deposited in a dilution point at the appropriate step of the automated dilution procedure. One step in the dilution pathway involves the step of introducing or depositing a sample at an appropriate dilution stage in order to generate a sample containing a pre-determined dilution concentration at a later, unique and discrete dilution location in the pathway.

The invention provides methods and apparatus for normalizing samples that previously have been difficult to automate. Efficient and effective solutions to automate the generation of uniform samples have been limited by the fact that many assays require specific nucleic acid concentrations that involve individualized sample analysis and dilution steps. For example, detection of somatic mutations from biological samples also invokes the ability to detect a small amount of mutant DNA in the presence of wild-type sequence, or highly heterogeneous DNA. As a result, for analysis of early stage colorectal cancer from stool samples, it is necessary to detect as little as 1% mutant DNA. These limitations are also true for detection of rare infectious disease, or pathogens. Samples of different starting concentrations are introduced at different dilution stages in the pathway.

Methods and apparatus of the invention are useful for automating the processing of multiple samples. In certain embodiments, methods and apparatus of the invention involve automated processing of multiple samples in an array. Also, certain embodiments of the invention involve arrays of two or more dimensions. Methods and apparatus of the invention are particularly useful for processing nucleic acid samples for digital amplification reactions. Methods and apparatus of the invention are also useful for the regulation of DNA heterogeneity relative to downstream analytical techniques and the technical sensitivity thereof. In addition, the invention provides the ability to detect rare DNA targets by enriching for target sequence. For example, if a 1% mutant population can be detected (e.g., using solid-phase mini-sequencing specific for mutant reactions), then it would also be possible to detect a 0.05-0.1% mutant (after a 20 to 10-fold enrichment, respectively). Methods and apparatus of the invention are also useful for genotypic testing, for example, the detection of mutations through retroviral detection testing, such as, HIV genotyping testing. In other embodiments, methods and apparatus of the invention may be used in connection with forensic testing, in-vitro prenatal diagnostics, the analysis of circulating cells, and any other assays or testing that may involve the dilution of a sample.

In one embodiment of the invention, multiple samples, such as samples obtained from a plurality of patients, are automatically processed to produce uniform samples for an analytical analysis. According to the invention, each of the samples may have a different initial sample concentrations such that these samples are introduced at various discrete stages in the dilution pathway. In another embodiment of the invention, one or more samples from a single patient are automatically processed to produce uniform samples for multiple analytical analyses.

Configurations contemplated by the invention include a variety of formats, for example, standard microtiter plate formats (e.g., 96, 384, and 1536 well plates), non-standard microtiter plates designed specifically for certain assays, and slides or other surfaces for serial deposits of sample at discrete or unique locations. Moreover, formats include standard formats and microfludic formats. Robotic liquid handlers can currently handle all of these formats and can be adapted to handle non-standard formats based upon a particular assay or assays. The limit on themial-cylers (for PCR) is currently 384-well plates. However, the invention contemplates devices adapted for thermal cycling additional formats including microtiter plates. The invention also contemplates automated procedures that involve other microtiter plate formats, including non-standard microtiter plate formats.

Additional aspects and advantages of the invention are apparent upon consideration of the following detailed description thereof.

Brief Description of the Drawings

FIG. 1 is a schematic diagram showing a serial dilution pathway using a method or algorithm of the invention for samples with similar initial concentrations.

FIG. 2 is a schematic diagram showing a serial dilution pathway using a method or algorithm of the invention for samples with different initial concentrations.

FIG. 3 is a schematic diagram showing a parallel array of equally diluted samples from many patients.

FIG. 4 is a schematic diagram showing a parallel array of equally diluted samples from one patient.

FIG. 5 is a schematic diagram showing a parallel array of diluted samples and a PCR plate for performing PCR on diluted samples in the array.

Detailed Description of the Invention

The invention provides a method and apparatus for minimizing the steps necessary in a dilution process. The invention also provides a method and apparatus for automating the dilution process. The invention provides a method for determining the step at which a sample is introduced into a sample-specific (or concentration-specific) dilution position in a pre-determined dilution pathway so that the analyte is diluted to a predetermined target concentration. Specifically, the invention involves determining the sample concentration of an analyte, and based on the concentration of the analyte, subsequently determining which position or point in the dilution pathway the sample should be introduced.

The analysis of biological samples often requires a pre-determined amount of material (e.g. nucleic acid) for an assay such as a diagnostic assay. Accordingly, automated procedures for producing samples of uniform concentration are useful in order to efficiently process multiple samples. The invention provides methods for reducing the number of manipulations required for an automated dilution procedure. According to the invention, a sample concentration is determined, and this sample concentration is used to determine the appropriate entry position or point at which the sample is introduced into a pre-determined dilution pathway that involves a plurality of consecutive dilution steps between a series of dilution points. For example, a 10,000 fold dilution can be obtained in a pathway involving 4 consecutive 10 fold dilution steps that take the sample from a first position or point in the dilution pathway to a fifth position or point in the dilution pathway. According to the invention, a sample or a portion of sample is introduced to a unique position in the apparatus (slide or microtiter plate, for example) corresponding to the initial concentration of analyte in the sample or portion of sample. Accordingly, methods of the invention involve providing a pre-determined series of dilution stages in a pathway. As such, after the initial concentration of an analyte in a sample is determined, a portion of the sample is introduced to the appropriate sample-specific dilution point or position in the pathway. For example, with a nucleic acid sample, the appropriate sample-specific dilution position or point in the pathway is determined by the nucleic acid concentration of the sample. Thereafter, the sample is serially diluted with each stage along the dilution pathway. According to the invention, the sample is diluted to a discrete, final dilution point in the pathway regardless of the initial concentration of the sample.

In certain embodiments, the sample is a biological sample. For example, the biological sample is (or may be derived from) stool, urine, saliva, seminal fluid, blood, sputum, cerebrospinal fluid, pancreatic fluid, bile, lymph, pus, and/or aspirate. A biological sample may be a nucleic acid sample that is obtained from one patient or a plurality of nucleic acid samples obtained from a plurality of patients. In related embodiments, the nucleic acid sample includes human or animal DNA. In certain embodiments, the biological sample also includes a cellular material. In other embodiments, a sample may be a non-biological sample. In additional embodiments, methods and apparatus of the invention are useful to automate the dilution of non-human samples. For example viral samples (for example intact viruses, viral nucleic acids, or viral proteins) can be diluted using methods of the invention.

Generally, according to the invention, a concentration of an analyte in a sample is determined. For example, in one embodiment of the invention, for methods and apparatus involving a nucleic sample that includes human DNA, the human DNA concentration can be determined by qPCR. However, the concentration of a sample may be determined by any means known to those skilled in the art, and may vary based upon the sample that is to be diluted.

Methods and apparatus for normalizing multiple samples include depositing a portion of samples in parallel across an array of dilution points or positions on an apparatus. Embodiments of the invention contemplate apparatus such as an array configured two or more dimensions. Also, methods and apparatus of the invention have discrete and unique positions on an apparatus, such as a well or a polony. A polony is a deposit introduced, for example, on a slide or other surface. Generally, each deposit or collection of sample forms a polony or droplet on a slide (or other surface) as a result of the surface tension of the sample or liquid. As such, an apparatus of the invention involve arrays that may be any standard plate having at least one well, such as a microtiter plate. In other embodiments of the invention, apparatus involve an array that includes a slide capable of receiving sample deposits across an array of polonies on the surface of the slide. Furthermore, each of the polonies occupy a unique position on the apparatus that corresponds to the initial concentration of an analyte in a sample.

The invention also includes performing a PCR reaction on the sample. In certain embodiments, the PCR reaction is performed on a portion of sample at the final dilution stage in a dilution pathway. Also, in certain embodiments of the invention, the sample is diluted to about 10 nucleic acid molecules at the final dilution stage. In other embodiments of the invention, the sample is diluted to about 5 nucleic acid molecules at the final dilution stage. In yet another embodiment of the invention, the sample is diluted to about 1 nucleic acid molecule at the final dilution stage.

Embodiments of the invention also include the step of analyzing the sample. In one embodiment, the sample at the final dilution stage in the pathway is analyzed. However, a sample may be isolated and analyzed at any dilution stage in the pathway. Analyzing the sample may involve performing an assay on the sample. For example, useful assays include enumerated LOH, DNA integrity assay, mutation detection, expression assays, and FISH. However, any assay or analyzing technique may be employed and may be dependent on the target sample. Also, specific assays may detect mutations at a genetic locus selected from the group consisting of p53, ras, APC, DCC, and BAT-26. Methods and apparatus of the invention may also include performing a retroviral detection test or assay. For example, specific tests or assays may be conducted to genotype viruses, for example to detect mutations or variants within an HIV virus or an HPV virus sample.

Also, methods of the invention include the step of labeling a nucleic acid sequence in the nucleic acid sample with a detectable label. Examples of detectable labels include, for example, radioisotopes, fluorescent compounds, antigenic markers and enzymatic markers. Other detectable markers may be used, and are know to those skilled in the art.

Methods of the invention also include a computer programmable method for the automation of sample dilution. Generally, methods of the invention include inputting data corresponding to a programmed algorithm for automated dilution of a sample along a series of dilution points in a pathway. The methods also include inputting data corresponding to a pre-detemiined initial concentration of at least one sample. Furthermore, the methods include determining an appropriate entry point for introducing the sample along the series of dilution points in the pathway. According to the invention, the appropriate entry point is determined by the initial concentration of the sample. Moreover, the methods include sending instructions to a computer or robotic device capable of introducing a sample into a specific stage in the pathway and diluting a sample along the dilution stage in the pathway. In related embodiments, all information and data is presented in a visual display or in audio. In related embodiments, the methods include input modules for inputting the data, such as the initial concentration of the sample, for use with the computer programmable method. Moreover, in related embodiments, all information and data may be provided to a user over a wired or wireless network.

The invention provides methods and apparatus for processing multiple patient samples in parallel to generate samples of uniform concentration. According to the invention, samples containing analytes having different starting concentrations of material are introduced into a series of dilution points in a pathway (or an automated serial dilution procedure) at different steps. For example, more concentrated patient samples are introduced earlier in the dilution procedure, and undergo more dilution steps than less concentrated patient samples which are introduced later in the dilution procedure. The appropriate introduction of the patient samples may be determined by a pre-determined algorithm or can be manipulated by the user.

An internal control can be used to monitor the dilution profile and control for variability in dilution steps between parallel samples. For example, a known amount of a fluorescent or other marker can be introduced at a stage, preferably the first stage, in a dilution pathway. The amount of marker is determined at one or more dilution stage in the dilution pathway and compared to a reference amount, or to an amount of marker in a parallel sample at the same stage in the dilution pathway. The amount of variation is an indication of the reproducibility of the dilution pathway in parallel samples.

The invention is particularly useful in the context of a series of dilution points in a dilution pathway or an automated dilution procedure that is performed using a two-dimensional array of sample deposits (e.g. a two-dimensional array of test tubes, a two-dimensional multiwell plate, a two-dimensional array of sample chambers, or other two-dimensional configuration of sample containers). One advantage of the invention is that it can be practiced using standard automation and robotic equipment for standard multiwell plates including 96, 384, and/or 1536 well plates. Also, another advantage of the invention is that it can be practiced using a slide. For example, deposits along a series of dilution points may be introduced on a slide as polonies. Accordingly, the use of polonies on slides or any other suitable surface provides for distribution of isolated samples without requiring a fixed or substantially fixed dimension or chamber, which is conventionally required in a multiwell-plate.

Methods and apparatus of the invention also include a series of dilution pathways that involve branched or bifurcated pathways. For example, the use of branched or bifurcated pathways provides for large-scale dilution and distribution of sample for comprehensive analysis and research. Furthermore, methods and apparatus of the invention also include pathways that are individually controlled and addressable. For example, certain pathways may be excluded based upon certain properties of the sample.

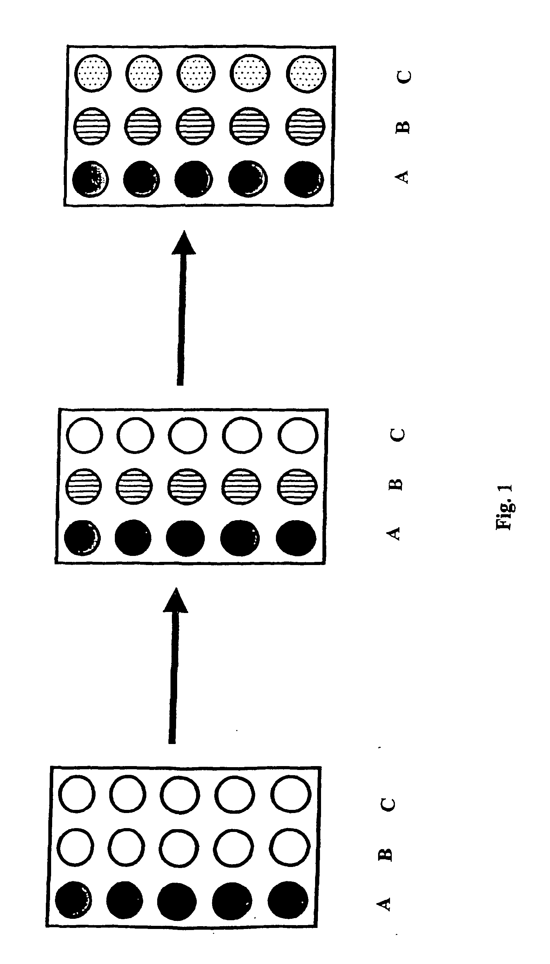

Figure 1 shows a serial dilution process where the starting samples are introduced in the column A, and are diluted stepwise through a series of two-fold dilutions moving across the array towards column C. Such a dilution procedure can result in large scale dilution over a small number of steps. For example, a 12 step dilution procedure wherein each step involves a two-fold dilution results in a dilution of $2^{12}$ (or 4096-fold) and a sample with an initial DNA concentration of 50,000 pg/100 $\mu$l is diluted to 12 pg/100$\mu$ls. One of ordinary skill in the art will understand that each dilution step can involve a different dilution factor (e.g. 5 fold dilution, 10 fold dilution, or other dilution factor) provided the dilution factor is reasonable given the size of the sample wells at each step. Accordingly, an appropriate dilution scheme can be designed for any application.

A generally applicable equation to calculate the dilution is as follows:

$C_f = N^{(x)}$ ; where $C_f$ is final concentration
N = dilution factor per transfer from column to column
x = number of dilutions (dependent on input row).

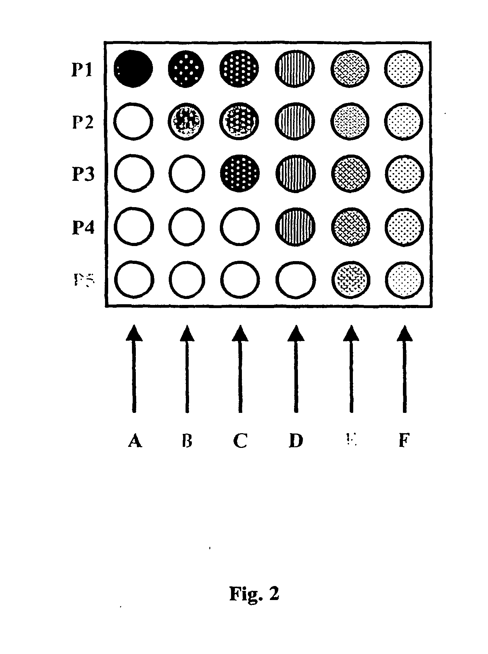

The example shown in Figure 1 illustrates a dilution procedure where the initial concentrations of the different sample are the same. However, in many situations the initial concentrations of biological samples vary significantly from one sample to the next. According to the invention, samples with different concentrations are introduced into a dilution algorithm at different steps in the serial dilution process. For example, Figure 2 shows a dilution procedure where five samples with different initial concentrations are introduced into a dilution procedure at five different stages, resulting in final concentrations that are identical. In this example, other samples with an initial concentration of P1 are introduced in column A. Similarly, other samples with an initial concentration of P2 , P3, P4, and P5 are introduced in columns B, C, D, E and F respectfully. The advantage of this method is that a uniform automated dilution procedure is performed across the two-dimensional array, but individualized dilutions are obtained by introducing individual samples at different steps in the dilution procedure.

Accordingly, Figure 2 shows a serial dilution process where the starting samples are introduced in one of the column A through F, and are diluted stepwise through a series of dilutions moving across the array towards column F. Although not shown in the array, a person skilled in the art understands that further dilutions may continue stepwise in hypothetical colunms G, H and so on (not shown) based upon the characteristics of the sample.

Also, after a sample is introduced or deposited in the appropriate well (in the case of an apparatus containing a substantially fixed dimension, such as a microtiter plate) or a polony (in the case of an apparatus, such as a slide), after the sample is diluted in the stepwise automated serial dilution process, the final dilution sample or final dilution deposit in each of the rows (P1 through P5) have substantially the same concentration. As a result, as provided in Example 2, the concentration of the sample in the initial P1 is greater than the initial P2, which is greater than the initial P3, and so on until the initial P5. However, the concentrations of the sample in the final P1 through P5 are substantially equivalent.

Accordingly, using the formula: $n = \mathrm{Log}_2\, C_{initial}/C_{final}$, where n = number of dilutions, C $C_{initial}$ = initial concentration and $C_{final}$ = final concentration: the user of this method or apparatus can determine the number of dilutions needed to achieve a desired end concentration.

One of ordinary skill in the art will understand that the sequential steps in the dilution procedure do not need to be adjacent in the two-dimensional array. For example, a first dilution step can be performed in column 5, a second dilution step in column 2, and a third in colunm 8. However, it would typically be more convenient to assign sequential dilution steps to sequential columns across a two-dimensional array.

One of ordinary skill in the art will also understand that the two-dimensional array is described as having columns and rows for convenience and clarity of description. The invention can be practiced by performing the dilution steps in any of the directions across an array of sample wells. For example, the invention can also be practiced by assigning different dilution steps to different rows as opposed to different columns in a two-dimensional array.

In a preferred embodiment of the invention, the sample-specific dilution steps are not significantly different in order to provide multiple entry points for different samples with initial concentrations that are not significantly different. More preferably, the sample-specific dilution steps are chosen to correspond to the range of different initial concentrations that are typically obtained for a given sample preparation.

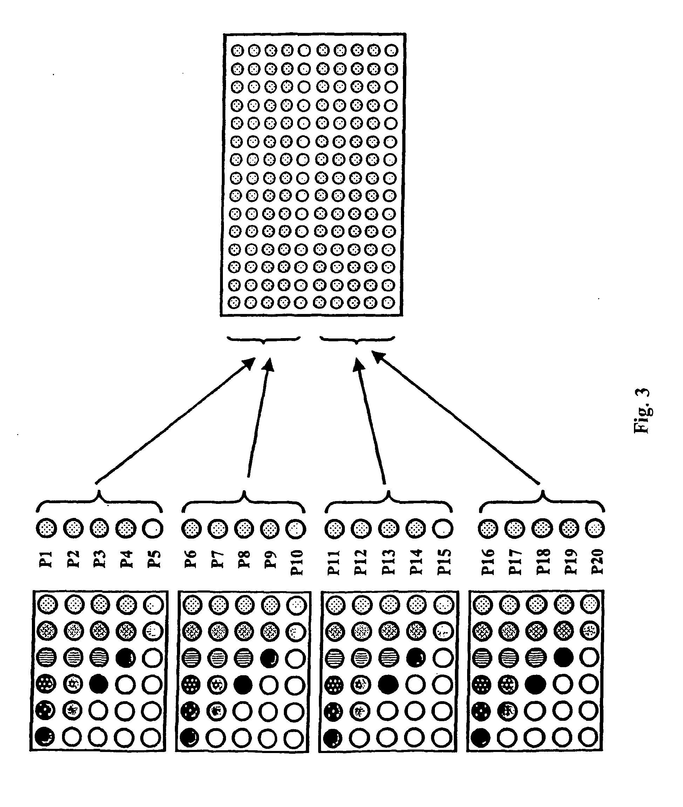

In one embodiment of the invention, automated dilution procedures are useful to generate a massively parallel array of equally diluted samples from patient samples of different concentrations. This is illustrated in Figure 3 where diluted samples are transferred to an array of samples (e.g. another multiwell plate) for diagnostic analysis. In this example, the different samples are all assayed using the same diagnostic test (e.g. looking for the same marker). However, in alternative embodiments, a diagnostic assay can be performed directly on the final sample step in the dilution procedure (e.g. on the column containing the final dilution step in the dilution array).

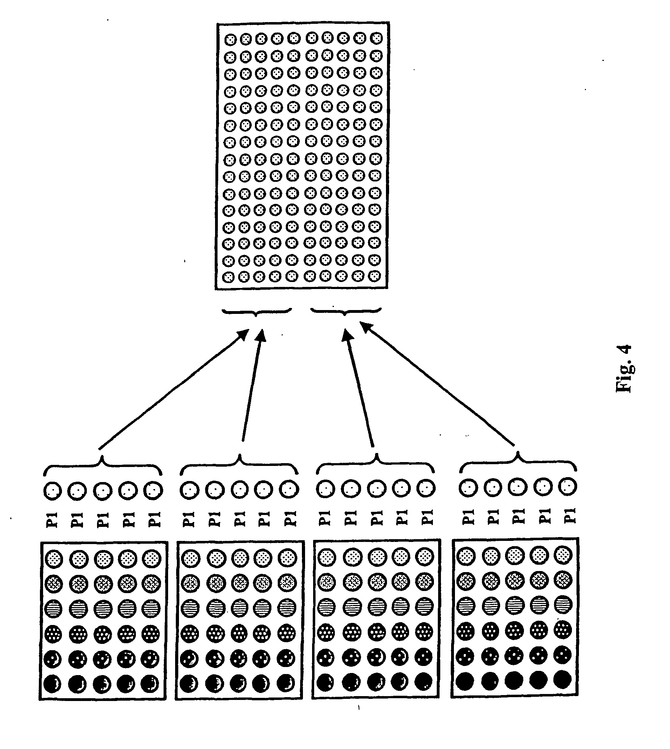

In another embodiment of the invention, automated dilution procedures are useful to generate a massively parallel array of equally diluted samples from a single patient, as illustrated in Figure 4. In this example, the samples are tested using different assays (e.g. for different diagnostic markers).

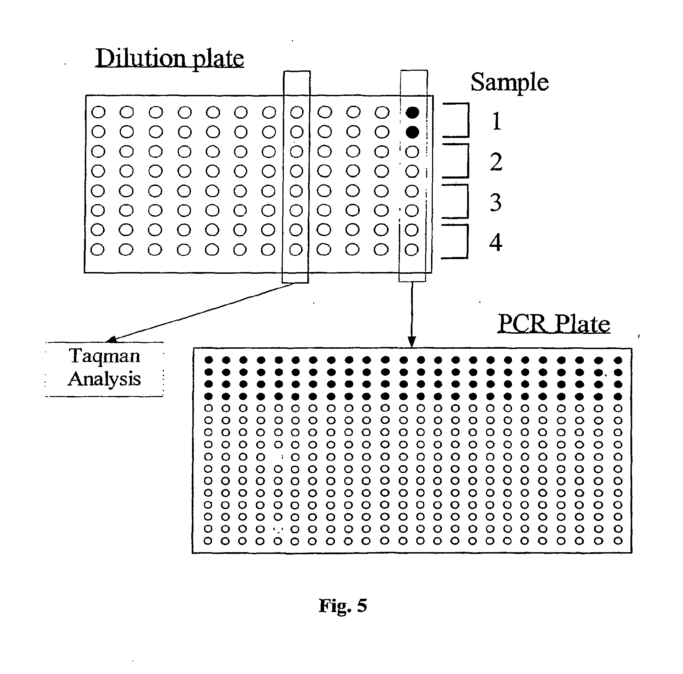

In another embodiment of the invention, automated dilution methods and apparatus are useful for generating samples for later analysis. For example, as represented in Figure 5, samples are introduced based upon the sample's concentration in a deposit in the appropriate columns on the dilution plate, and thereafter, the samples are diluted stepwise through a series of dilutions moving across the array. Generally, if the final dilution sample or deposit (the last column on the right, for example) is to be analyzed, then there must be sufficient volume in this sample or deposit to run multiple PCR reactions. Also, in certain embodiments, as shown in Figure 5, real-time quantitative PCR analysis may be performed on a sample or samples having a known sample concentration at a certain discrete, dilution point by means known to those skilled in the art, such as, for example, performing a TaqMan® analysis. In other embodiments, a sample or samples having a certain dilution concentration may be evaluated for gene expression analysis, genotyping, viral or pathogen detection/quantitation, and/or mutation screening. One of ordinary skill in the art will understand that a detection assay can be performed at any one or more points or stages in the dilution pathway. In one embodiment, the last two to five dilution points or stages are assayed.

Also, in certain embodiments, a PCR reaction may be performed on a sample or samples having a certain sample concentration. The number of PCR's required generally is dependent on the mutant enrichment and analytical sensitivity, which accordingly, leads to a probability of detecting the mutant population. The following table provides a representative demonstration of the relationship between the number of PCRs required, the degree of mutant enrichment and the analytical sensitivity and probability of detecting the mutant population.

Table A: Nominal Mutant Reactions Detectable Per 100 PCRs

| Starting Mutant Heterogeneity[1] | Mutant % [2] (Nominal number of mutant PCR's per 100 total PCR's) | | | |
|---|---|---|---|---|
| | 1 Copy/PCR[3] | 5 Copy/PCR | 10 Copy/PCR | 50 Copy/PCR |
| 10% | 100% (10) | 20% (50) | 10% (100) | 2% (100) |
| 5% | 100% (5) | 20% (25) | 10% (50) | 2% (100) |
| 1% | 100% (1) | 20% (5) | 10% (10) | 2% (50) |

(continued)

| Starting Mutant Heterogeneity[1] | Mutant % [2] (Nominal number of mutant PCR's per 100 total PCR's) | | | |
|---|---|---|---|---|
| | 1 Copy/PCR[3] | 5 Copy/PCR | 10 Copy/PCR | 50 Copy/PCR |
| 0.5% | 100% (<1)[4] | 20% (2.5) | 10% (5) | 2% (25) |
| 0.1% | 100% (<1) | 20% (<1) | 10% (1) | 2% (5) |
| (1) Percentage of mutant molecules (copies) to total molecules (mutant + wild-type). (2) Equivalent to the required analytical sensitivity for detection of mutant in a heterogenous population of DNA. (3) Equivalent to 1 molecule/PCR. This means mutant % (in the cases where mutant molecules are present) is 100%. (4) Must run > 100 PCR's in order to detect mutant. | | | | |

Table A shows nominal mutant reactions detectable per 100 PCRs. The actual enrichment and mutant detectability can vary (positive or negative) due to the Poisson distribution of molecules in starting samples, and as a result of distributions during manipulations (e.g., pipetting, dilutions, preparations of PCR reactions, variable PCR efficiency, etc.). As Table A indicates, the starting mutant heterogeneity is the percentage of mutant molecules (copies) to total molecules (mutant and wild-type). The mutant percentage is equivalent to the required analytical sensitivity for detection of mutant in a heterogeneous population of DNA. Also, the 1 Copy/PCR is equivalent to 1 molecule per PCR, which also is equivalent to a mutant percentage (in the cases where mutant molecules are present) of 100%. Also, if the nominal number of mutant PCR's per 100 total PCR's is less than about 1, then this is an indication that over 100 PCRs must be conducted in order to detect a mutant.

Methods and apparatus of the invention are particularly useful for nucleic acid sample preparations. According to the invention, a patient sample may be introduced into a dilution procedure at an appropriate dilution step based on the concentration of patient (e.g. human) nucleic acid in the sample. The amount of patient nucleic acid in the sample can be determined according to known methods in the art. If the sample is prepared from patient cells (e.g. blood), the amount of nucleic acid in the sample is indicative of the amount of patient nucleic acid in the sample and can be measured for example by UV absorbance at 260mn or by using standard dye based quantitation methods. In contrast, if the sample is prepared from a stool sample, the amount of patient nucleic acid is much less than the amount of bacterial nucleic acid. Accordingly, the amount of patient nucleic acid is determined by quantitative PCR (qPCR) using human specific (or more generally, target specific) oligonucleotide probes. Alternatively, the patient nucleic acid can be purified by removing the bacterial nucleic acid using standard techniques known to those skilled in the art. Purified patient nucleic acid can be quantified as described above or by any other means known to those skilled in the art.

According to the invention, diluted samples can be assayed or analyzed by numerous techniques including techniques known in the art, including DNA sequencing, solid-phase minisequericing, primer extension reactions, allele-specific oligonucleotide (ASO) hybridization probes, oligonucleotide ligation assays (OLA), allele-specific PCR (ASP), mass spectrometry (MS) including MALDI and ESI ionization techniques, enzyme-linked immunoassays (ELISA), microarrays, and protein truncation tests (PTT).

Other aspects and advantages of the invention are apparent upon consideration of the disclosure herein.

<u>Example:</u>

<u>Automated Sample Dilution for Digital PCR:</u>

Digital PCR (DIG-PCR) is based on a dilution of a starting DNA solution to the point that single molecules are isolated and then amplified using PCR. However, the dilution process is typically laborious. However, an alternative approach provided by the invention is to automate the dilution process using commercially available robotic fluid handlers and standard microtiter plate formats which provides for greater flexibility for downstream analysis techniques. More importantly, the need for very high numbers of analysis "wells" is eliminated due to the normalization of patient to patient DNA variability at the analysis stage. This is due to the increased number of productive wells (i.e., resulting in positive PCR results) using this invention.

The challenges of reproducibly generating high degrees of dilution for digital PCR using common robotic liquid handlers involve the following factors:

relying on serial dilutions to insure accuracy and reproducibility;
allowing for a high degree of variability of initial DNA concentration to be expected from sample to sample;
targeting final concentrations in the range of 5-50 pg DNA (in the range of 1 to 5 cell equivalents of target sequence);
conforming to standard instrumentation (robotic liquid handlers) and consumables (microtiter-plate) formats for direct applicability.

According to one embodiment of the invention, samples are introduced robotically into the columns of a microtiter-plate and a robotic liquid handler is programmed to serially dilute samples as they are transferred from one well to the next in a row, adding an equivalent volume of fresh buffer at each transfer (effecting a 2x dilution at each transfer). In a standard microtiter-plate format (8x12 wells) this allows for a dilution of up to 8 samples in parallel. In one example, assuming an initial concentration of 50,000pg/100$\mu$l, starting in well A1 and proceeding to well A12 results in a final concentration of 12pg/100 $\mu$l, according to the equation:

$$C_{final} = C_{initial}/(2)^n,$$

where n = number of dilutions.

The volume of diluted DNA solution left in the last well of a row is sufficient to feed many parallel PCR reactions, in concert with the original DIG-PCR concept of analyzing the resultant "homogenous" or enriched DNA populations. In an example where a final quantity of 250$\mu$l of diluted DNA is left in the last well, this would be sufficient to run 50 PCR reactions assuming 5ul of DNA solution per reaction (e.g. 50ul total reaction volume), or greater number of reactions assuming a scaled-down PCR reaction volume.

According to one aspect of the invention, a sample dilution procedure does not require that the sample be diluted to a single molecule. In a preferred embodiment, a sample is diluted to a point where about 5 molecules are present. For example, a mutation can be detected in this sample provided that the detection assay is sufficiently sensitive to detect a mutation that is present in 20% of the molecules. Accordingly, a preferred sample dilution is determined by the sensitivity of the diagnostic detection assay that is to be performed on the diluted sample.

**Claims**

1.    A method for normalizing analyte concentration in a plurality of samples, the method comprising the steps of :

      providing a predetermined dilution pathway comprising a plurality of consecutive dilution steps between a series of dilution points;
      providing a predetermined target analyte concentration;
      determining an initial concentration of an analyte in each of a plurality of samples;
      for each sample, introducing a portion of the sample on an apparatus such that the portion occupies a unique position on the apparatus related to the analyte's initial concentration and corresponding to a sample-specific dilution point in the dilution pathway that will produce the predetermined target analyte concentration at the final dilution point in the dilution pathway, and
      diluting the plurality of samples to obtain the target analyte concentration at the final dilution point for each sample such that the plurality of samples are normalized with respect to analyte concentration.

2.    The method of claim 1 wherein the portions of each sample are introduced on the apparatus robotically.

3.    The method of claim 1 wherein the sample is a biological sample.

4.    The method of claim 3 wherein the biological sample is selected from the group consisting of stool, urine, saliva, seminal fluid, blood, sputum, cerebrospinal fluid, pancreatic fluid, bile, lymph, pus, and aspirate.

5.    The method of claim 1 wherein the analyte, is a nucleic acid.

6.    The method of claim 5 wherein the nucleic acid is human DNA.

7.    The method of claim 6 wherein the human DNA concentration is determined by qPCR.

8. The method of claim 1 wherein the apparatus is an array.

9. The method of claim 1 wherein the unique position is a well or a polony.

10. The method of claim 8 wherein the array is a microtiter plate.

11. The method of clam 10 wherein the microtiter plate comprises a plurality of wells.

12. The method of claim 8 wherein the array is a slide.

13. The method of claim 12 wherein the portions of each sample is deposited as discrete polonies on the slide.

14. The method of claim 1 wherein a PCR reaction is performed on the portion of the sample.

15. The method of claim 14 wherein the portion of the sample is located at the final dilution stage in the pathway.

16. The method of claim 15 wherein the sample is diluted to about 10 nucleic acid molecules at the final dilution stage.

17. The method of claim 1 wherein the sample is diluted to about 5 nucleic acid molecules at the final dilution stage.

18. The method of claim 15 wherein the sample is diluted to about 1 nucleic acid molecule at the final dilution stage.

19. The method of claim 1 further comprising the step of analyzing the portion of a sample.

20. The method of claim 19 wherein the sample is located at the final dilution stage in the pathway.

21. The method of claim 5 further comprising the step of labeling a nucleic acid sequence in the nucleic acid sample with a detectable label.

22. The method of claim 21 wherein the detectable label is selected from the group consisting of radioisotopes, fluorescent compounds, antigenic markers and enzymatic markers.

23. The method of claim 3 wherein the biological sample comprises a cellular material.

24. The method of claim 19 wherein the analyzing step comprises performing an assay selected from the group consisting of enumerated LOH, DNA integrity assay, mutation detection, expression assays, and FISH.

25. The method of claim 24 wherein the assay detects mutations at a genetic locus selected from the group consisting of p53, ras, APC, DCC, and BAT-26.

26. The method of claim 19 wherein the analyzing step comprises performing a viral detection assay.

27. The method of claim 26 wherein the viral assay comprises a HIV virus or a HPV virus.

28. A method for normalizing a sample, the method comprising the steps of:

providing a pre-determined series of dilution stages in a pathway;
determining an initial concentration of an analyte in a sample;
introducing a portion of the sample in a unique position on an apparatus, wherein the unique position is determined by the initial concentration of the analyte; and,
diluting the sample such that the final concentration of the analyte in the sample is normalized.

29. The method of claim 28 wherein the step of diluting is performed serially.

30. The method of any one of the preceding claims, wherein the sample dilution is automated.

**EP 1 456 648 B1**

**Patentansprüche**

1. Verfahren zum Normieren der Analytkonzentration in einer Mehrzahl von Proben, wobei das Verfahren folgende Schritte aufweist;

   Vorsehen eines vorbestimmten Verdünnungswegs, der eine Mehrzahl von aufeinander folgenden Verdünnungsschritten zwischen einer Reihe von Verdünnungspunkten aufweist;
   Vorsehen einer vorbestimmten Zielanalytkonzentration;
   Bestimmen einer Anfangskonzentration eines Analyten in jeder von einer Mehrzahl von Proben;
   für jede Probe, Bringen eines Teils der Probe dergestalt auf eine Vorrichtung, dass der Teil eine einzigartige Position auf der Vorrichtung einnimmt, die zur Anfangskonzentration des Analyten in Beziehung steht und einem probenspezifischen Verdünnungspunkt in dem Verdünnungsweg entspricht, der an dem endgültigen Verdünnungspunkt in dem Verdünnungsweg zu der vorbestimmten Zielanalytkonzentration führt; und
   Verdünnen der Mehrzahl von Proben, um an dem endgültigen Verdünnungspunkt für jede Probe die Zielanalytkonzentration zu erhalten, so dass die Mehrzahl von Proben bezüglich der Analytkonzentration normiert sind.

2. Verfahren nach Anspruch 1, bei dem die Teile jeder Probe automatisch auf die Vorrichtung gebracht werden.

3. Verfahren nach Anspruch 9, bei dem die Probe eine biologische Probe ist,

4. Verfahren nach Anspruch 3, bei dem die biologische Probe ausgewählt wird aus der Gruppe, die aus Stuhl, Urin, Speichel, Sperma, Blut, Auswurf, Gehirn- und Rückenmarksflüssigkeit, Pankreasflüssigkeit, Galle, Lymphe, Eiter und Aspirat besteht.

5. Verfahren nach Anspruch 1, bei dem der Analyt eine Nucleinsäure ist.

6. Verfahren nach Anspruch 5, bei dem die Nucleinsäure menschliche DNA ist.

7. Verfahren nach Anspruch 6, bei dem die Konzentration an menschlicher DNA durch qPCR bestimmt wird.

8. Verfahren nach Anspruch 1, bei dem die Vorrichtung ein Array ist.

9. Verfahren nach Anspruch 1, bei dem die einzigartige Position eine Vertiefung oder eine Polonie ist.

10. Verfahren nach Anspruch 8, bei dem der Array eine Mikrotiterplatte ist.

11. Verfahren nach Anspruch 10, bei dem die Mikrotiterplatte eine Mehrzahl von Vertiefungen aufweist.

12. Verfahren nach Anspruch 8, bei dem der Array ein Objektträger ist.

13. Verfahren nach Anspruch 12, bei dem die Teile jeder Probe als getrennte Polonien auf den Objektträger aufgebracht werden.

14. Verfahren nach Anspruch 1, bei dem eine PCR-Reaktion an dem Teil der Probe durchgeführt wird.

15. Verfahren nach Anspruch 14, bei dem der Teil der Probe an der endgültigen Verdünnungsstufe in dem Weg angeordnet wird.

16. Verfahren nach Anspruch 15, bei dem die Probe auf etwa 10 Nucleinsäure-Moleküle in der endgültigen Verdünnungsstufe verdünnt wird.

17. Verfahren nach Anspruch 15, bei dem die Probe auf etwa 5 Nucleinsäure-Moleküle in der endgültigen Verdünnungsstufe verdünnt wird.

18. Verfahren nach Anspruch 15, bei dem die Probe auf etwa 1 Nucleinsäure-Molekül in der endgültigen Verdünnungsstufe verdünnt wird.

19. Verfahren nach Anspruch 1, außerdem aufweisend den Schritt des Analysierens des Teils einer Probe.

20. Verfahren nach Anspruch 19, bei dem die Probe an der endgültigen Verdünnungsstufe in dem Weg angeordnet wird.

21. Verfahren nach Anspruch 5, außerdem aufweisend den Schritt des Markierens einer Nucleinsäure-Sequenz in der Nucleinsäure-Probe mit einer nachweisbaren Markierung.

22. Verfahren nach Anspruch 21, bei dem die nachweisbare Markierung ausgewählt wird aus der Gruppe, die aus Radioisotopen, fluoreszierenden Verbindungen, Antigenmarkern und Enzymmarkern besteht.

23. Verfahren nach Anspruch 3, bei dem die biologische Probe ein Zellmaterial aufweist.

24. Verfahren nach Anspruch 19, bei dem der Schritt des Analysierens das Durchführen eines Tests aufweist, der ausgewählt wird aus der Gruppe, die aus enumeriertem LOH, DNA-Integritätstest, Mutationsnachweis, Expressionstests und FISH besteht.

25. Verfahren nach Anspruch 24, bei dem der Test Mutationen an einem Genort nachweist, der ausgewählt wird aus der Gruppe, die aus p53, ras, APC, DCC und BAT-26 besteht.

26. Verfahren nach Anspruch 19, bei dem der Schritt des Analysierens das Durchführen eines Viren-Nachweistests aufweist.

27. Verfahren nach Anspruch 26, bei dem der Virentest ein HIV-Virus oder ein HPV-Virus umfasst.

28. Verfahren zum Normieren einer Probe, wobei das Verfahren folgende Schritte aufweist:

   Vorsehen einer vorbestimmten Reihe von Verdünnungsstufen in einem Weg;
   Bestimmen einer Anfangskonzentration eines Analyten in einer Probe;
   Bringen eines Teils einer Probe in eine einzigartige Position auf einer Vorrichtung, wobei die einzigartige Position durch die Anfangskonzentration des Analyten bestimmt wird; und
   Verdünnen der Probe dergestalt, dass die Endkonzentration des Analyten in der Probe normiert wird.

29. Verfahren nach Anspruch 28, bei dem der Schritt des Verdünnens in Folge durchgeführt wird.

30. Verfahren nach irgendeinem der vorangehenden Ansprüche, bei dem die Probenverdünnung automatisiert ist.

**Revendications**

1. Procédé pour normaliser la concentration d'un analyte dans une pluralité d'échantillons, le procédé comprenant les étapes consistant à :

   prévoir un schéma de dilution prédéterminé comprenant une pluralité d'étapes de dilution consécutives entre une série de points de dilution ;
   prévoir une concentration d'analyte cible prédéterminée ;
   déterminer la concentration initiale d'un analyte dans chacun des échantillons d'une pluralité d'échantillons ;
   pour chaque échantillon, introduire une partie de l'échantillon sur un dispositif de façon que la partie occupe une position unique sur le dispositif, fonction de la concentration initiale de l'analyte et correspondant à un point de dilution spécifique de l'échantillon dans le schéma de dilution qui va produire la concentration d'analyte cible prédéterminée au point de dilution final dans le schéma de dilution ; et
   diluer la pluralité d'échantillons pour obtenir la concentration d'analyte cible au point de dilution final pour chaque échantillon de façon que la pluralité d'échantillons soit normalisée en ce qui concerne la concentration d'analyte.

2. Procédé selon la revendication 1, dans lequel les parties de chaque échantillon sont introduites sur le dispositif de manière robotisée.

3. Procédé selon la revendication 1, dans lequel l'échantillon est un échantillon biologique.

4. Procédé selon la revendication 3, dans lequel l'échantillon biologique est choisi dans le groupe constitué par les selles, l'urine, la salive, le liquide séminal, le sang, les crachats, le liquide céphalorachidien, le fluide pancréatique, la bile, la lymphe, le pus, et un aspirat.

5.  Procédé selon la revendication 1, dans lequel l'analyte est un acide nucléique.

6.  Procédé selon la revendication 5, dans lequel l'acide nucléique est un ADN humain.

7.  Procédé selon la revendication 6, dans lequel la concentration d'ADN humain est déterminée par qPCR.

8.  Procédé selon la revendication 1, dans lequel le dispositif est un réseau.

9.  Procédé selon la revendication 1, dans lequel la position unique est un puits ou une colonie de PCR (polonie).

10. Procédé selon la revendication 8, dans lequel le réseau est une plaque de microtitrage.

11. Procédé selon la revendication 10, dans lequel la plaque de microtitrage comprend une pluralité de puits.

12. Procédé selon la revendication 8, dans lequel le réseau est une lamelle.

13. Procédé selon la revendication 12, dans lequel les parties de chaque échantillon sont déposées sous la forme de colonies de PCR discrètes sur la lamelle.

14. Procédé selon la revendication 1, dans lequel une réaction PCR est effectuée sur la partie de l'échantillon.

15. Procédé selon la revendication 14, dans lequel la partie de l'échantillon est localisée au stade de dilution final dans le schéma.

16. Procédé selon la revendication 15, dans lequel l'échantillon est dilué à environ 10 molécules d'acide nucléique au stade de dilution final.

17. Procédé selon la revendication 15, dans lequel l'échantillon est dilué à environ 5 molécules d'acide nucléique au stade de dilution final.

18. Procédé selon la revendication 15, dans lequel l'échantillon est dilué à environ 1 molécule d'acide nucléique au stade de dilution final.

19. Procédé selon la revendication 1, comprenant en outre l'étape consistant à analyser la partie d'un échantillon.

20. Procédé selon la revendication 19, dans lequel l'échantillon est localisé au stade de dilution final dans le schéma.

21. Procédé selon la revendication 5, comprenant en outre l'étape consistant à marquer une séquence d'acide nucléique dans l'échantillon d'acide nucléique avec un marqueur détectable.

22. Procédé selon la revendication 21, dans lequel le marqueur détectable est choisi dans le groupe constitué par les radioisotopes, les composés fluorescents, les marqueurs antigéniques et les marqueurs enzymatiques.

23. Procédé selon la revendication 3, dans lequel l'échantillon biologique comprend un matériau cellulaire.

24. Procédé selon la revendication 19, dans lequel l'étape d'analyse comprend l'opération consistant à effectuer un essai choisi dans le groupe constitué par une numération LOH, un essai d'intégrité d'ADN, une détection de mutation, des essais d'expression, et une hybridation FISH.

25. Procédé selon la revendication 24, dans lequel l'essai détecte des mutations au niveau d'un locus génétique choisi dans le groupe constitué par p53, ras, APC, DCC et BAT-26.

26. Procédé selon la revendication 19, dans lequel l'étape d'analyse comprend l'opération consistant à effectuer un test de détection virale.

27. Procédé selon la revendication 26, dans lequel le test viral comprend un virus VIH ou un virus VPH.

**28.** Procédé pour normaliser un échantillon, le procédé comprenant les étapes consistant à :

prévoir une série prédéterminée de stades de dilution dans un schéma ;
déterminer la concentration initiale d'un analyte dans un échantillon ;
introduire une partie de l'échantillon dans une position unique sur un dispositif, où la position unique est déterminée par la concentration initiale de l'analyte ; et
diluer l'échantillon de façon que la concentration finale de l'analyte dans l'échantillon soit normalisée.

**29.** Procédé selon la revendication 28, dans lequel l'étape de dilution est effectuée en série.

**30.** Procédé selon l'une quelconque des revendications précédentes, dans lequel la dilution d'échantillon est automatisée.

Fig. 1

**Fig. 2**

Fig. 3

Fig. 4

**Fig. 5**

**EP 1 456 648 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US SN60331654 P